# EUROPÄISCHE PATENTANMELDUNG

(11) **EP 2 607 218 A2**
(43) Veröffentlichungstag der Anmeldung: **26.06.2013**
(21) Anmeldenummer: 12199017.0
(22) Anmeldetag: 21.12.2012
(51) Int. Cl.: B62H 5/00, A42B 3/00

(54) **Helmschloss für einen Fahrradhelm**

(30) Priorität: 23.12.2011 DE 202011052480 U; 06.01.2012 DE 102012100101
(71) Anmelder: Hoppe, Claudia, 12209 Berlin (DE)
(72) Erfinder: Hoppe, Claudia, 12209 Berlin (DE)
(74) Vertreter: Kleine, Hubertus

(57) **Zusammenfassung**

Die Erfindung betrifft ein Helmschloss für einen Fahrradhelm, das zwei Grundelemente (10, 20) aufweist, die über einen zwischen ihnen angeordneten Verbindungsstift (22) abschließbar miteinander verbindbar sind. Das Helmschloss zeichnet sich dadurch aus, dass mindestens eines der Grundelemente (10, 20) als Fahrradlampe ausgebildet ist.

## Beschreibung

Die Erfindung betrifft ein Helmschloss, mit dem ein Fahrradhelm gegen Diebstahl gesichert werden kann und gesichert an einem Fahrrad angebracht werden kann.

Um einen Fahrradhelm bei abgestelltem Fahrrad nicht mitführen zu müssen, erweist es sich als sehr praktisch, diesen Helm diebstahlsicher am Fahrrad festlegen zu können. Fahrradhelme weisen üblicherweise meist schlitzförmige Belüftungsöffnungen in ihrer Helmschale auf. Diese können zum Festlegen des Helms am Fahrrad genutzt werden, beispielsweise indem ein Drahtseil oder ein Bügel eines Fahrradschlosses durch eine solche Belüftungsöffnung geführt wird, bevor das Fahrrad mit dem Schloss gesichert wird. Allerdings sind insbesondere hochwertige und diebstahlsichere Fahrradschlösser mit einem Drahtseil oder Bügel versehen, dessen Durchmesser zu groß ist, um durch die Belüftungsöffnung des Helmes geführt werden zu können.

Aus der Druckschrift DE 2 97 20 922 U1 ist eine abschließbare Haltevorrichtung für einen Fahrradhelm bekannt, die am Fahrrad montiert ist und einen Aufnahmeteller aufweist, in den ein Fahrradhelm eingelegt werden kann. Es ist ein verriegelbarer und abschließbarer Haltebügel vorgesehen, der den Fahrradhelm im Aufnahmeteller diebstahlsicher festhält. Diese Vorrichtung ist jedoch aufwändig und erhöht unerwünschter Weise das Gewicht des Fahrrads.

Die Druckschrift DE 42 41 235 A1 beschreibt einen Diebstahlschutz für einen Fahrradhelm, bei dem im Helm ein Schloss integriert ist, das mit einer am Fahrrad montierten Halterung zusammenwirkt. Hierbei ist nachteilig, dass das Helmschloss in dem Helm integriert sein muss und somit nicht für beliebige Helme eingesetzt werden kann.

Es ist daher eine Aufgabe der vorliegenden Erfindung, ein Helmschloss bereitzustellen, das universell mit üblichen Fahrradhelmen eingesetzt werden kann und bei dem aufwändige zusätzliche Einrichtungen zur Befestigung am Fahrrad nicht benötigt werden. Weiter soll das Helmschloss so ausgestaltet sein, dass es das Gewicht des Fahrrads möglichst wenig erhöht.

Diese Aufgabe wird gelöst durch ein Helmschloss mit den Merkmalen des Anspruchs 1. Weiterbildung und vorteilhafte Ausgestaltungen sind Gegenstand der abhängigen Ansprüche.

Die Erfindung betrifft ein Helmschloss für einen Fahrradhelm, das zwei Grundelemente aufweist, die über einen zwischen ihnen angeordneten Verbindungsstift abschließbar miteinander verbindbar sind.

Um einen Helm zu sichern, wird der Verbindungsstift durch eine Belüftungsöffnungen eines Fahrradhelms geführt und so mit den Grundelementen verbunden, dass sich der Helm zwischen den Grundelementen befindet. Nach einem Abschließen des Helmschlosses, über das die Verbindung der beiden Grundelemente miteinander unlösbar gesichert wird, kann das Helmschloss nur durch eine gewaltsame Beschädigung des Helms von diesem entfernt werden, wodurch bereits ein Diebstahl verhindert wird. Es wird dabei davon ausgegangen, dass die Grundelemente so bemessen sind, dass nicht durch Belüftungsöffnungen üblicher Größe passen. Zusätzlich kann der Verbindungsstift durch eine am Fahrrad angeordnete Öffnung geführt werden, wodurch Helmschloss und Helm auch am Fahrrad festgelegt werden.

Erfindungsgemäß ist mindestens eines der Grundelemente als Fahrradlampe ausgebildet. Bevorzugt ist dabei eines der Grundelemente als Fahrradvorderlampe und/oder ein weiteres der Grundelemente als Rücklicht ausgebildet. Auf diese Weise kann das Helmschloss beim Benutzen des Fahrrads sinnvoll, nämlich als Fahrradlampe, verwendet werden, die dann auch noch ihrerseits diebstahlgeschützt zusammen mit dem Helm festgelegt werden kann. Durch die Mehrfachverwendung des Grundelements wird Material und somit auch Gewicht am Fahrrad eingespart.

In einer vorteilhaften Ausgestaltung des Helmschlosses ist eines der Grundelemente als ein Griff mit einem Schließzylinder ausgebildet, wobei über den Schließzylinder die Verbindung der beiden Grundelemente gegen ein unerwünschtes Lösen gesichert werden kann. Bevorzugt weist eines der Grundelemente ein Lampengehäuse auf, in dem Leuchtmittel, ein Schalter und ein Batteriefach angeordnet sind, sowie ein Befestigungselement, um das Lampengehäuse an einem Fahrrad zu befestigen. Weiter bevorzugt können die Grundelemente im verbundenen Zustand so weit aufeinander zu bewegt werden, dass sie sich mit zueinander weisenden Oberflächen berühren. Besonders bevorzugt weist das Lampengehäuse dabei eine Vertiefung auf, um den Griff ganz oder teilweise aufzunehmen. Auf diese Weise ist das Helmschloss besonders kompakt ausgestaltet. Der in der Vertiefung versenkte Griff mindert zudem eine Verletzungsgefahr bei einem Unfall oder Sturz mit dem Fahrrad.

Weitere vorteilhafte Ausgestaltungen und Weiterbildungen sind Gegenstand der abhängigen Ansprüche.

Die Erfindung wird nachfolgend anhand eines Ausführungsbeispieles mit Hilfe von drei Figuren dargestellt. Die Figuren zeigen:

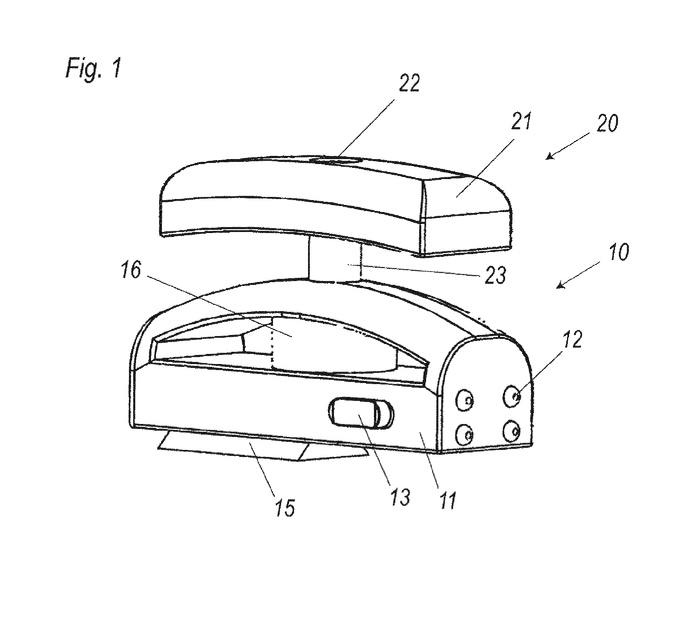

- Fig. 1-3:: Ein Ausführungsbeispiel eines Helmschlosses in schematischen perspektivischen Darstellungen aus unterschiedlichen Perspektiven und in unterschiedlichen Schließzuständen.

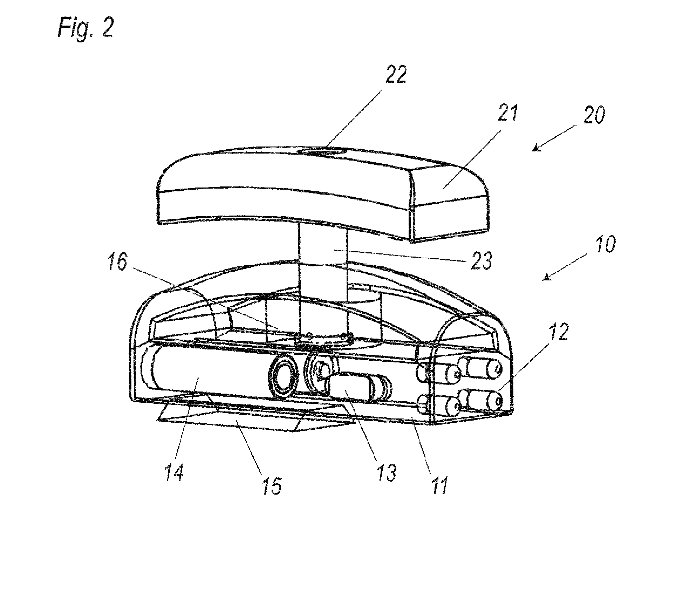

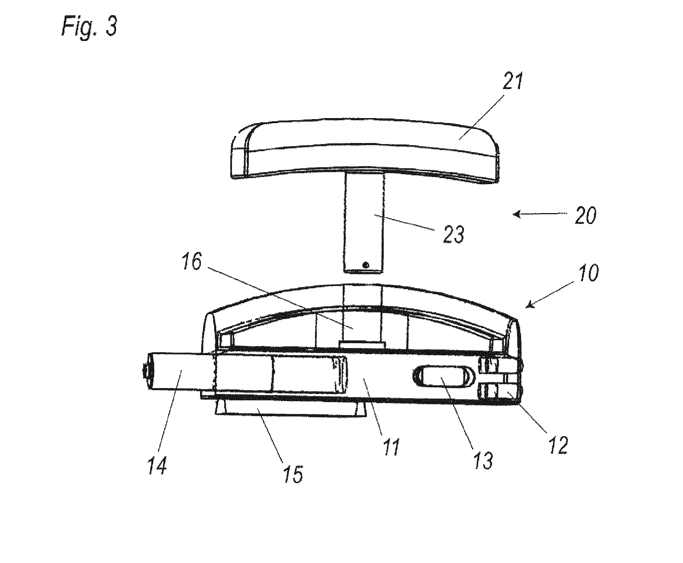

Die Figuren 1 und 2 zeigt ein Ausführungsbeispiel eines Helmschlosses gemäß der Anmeldung in einer Schrägperspektive. Figur 3 stellt das Helmschloss in einer perspektivischen Seitenansicht dar. In den Figuren 2 und 3 ist das Helmschloss teilweise transparent dargestellt, um seinen inneren Aufbau darzustellen.

Das Helmschloss weist zwei Grundelemente 10, 20 auf, die über einen Verbindungsstift 23 verriegelbar und abschließbar miteinander verbunden werden können. Die Figuren 1 und 2 zeigen das Helmschloss im verriegelten Zustand. In Figur 3 ist der entriegelte Zustand gezeigt, in dem die beiden Grundelemente 10 und 20 voneinander getrennt sind.

Das in der Figur unten dargestellte erste Grundelement 10 ist in diesem Ausführungsbeispiel als eine Fahrradlampe, insbesondere als Vorderlampe, ausgebildet. Es weist ein längliches Lampengehäuse 11 auf, in dessen vorderem Teil Leuchtmittel 12 angeordnet sind, hier beispielhaft vier Leuchtdioden. Alternativ ist ein Einsatz einer Glühbirne, beispielsweise einer Halogenbirne als Leuchtmittel 12 in Verbindung mit einem Reflektor möglich. Ein Reflektor kann selbstverständlich auch im Zusammenhang mit Leuchtdioden als Leuchtmittel 12 eingesetzt werden. Das Leuchtmittel 12 ist über einen von außen bedienbaren Schalter 13 mit einem Batteriefach 14, das im hinteren Teil des Lampengehäuses 11 positioniert ist, elektrisch verbunden. An der Unterseite des Lampengehäuses 11 ist ein Befestigungselement 15 angeordnet oder ausgebildet, das mit einem hier nicht dargestellten Halter zusammenwirkt, beispielsweise eingesteckt wird. Der Halter wird üblicherweise am Lenker eines Fahrrads montiert. Das als Fahrradlampe ausgebildete Grundelement 10 des Helmschlosses ist somit wie ein bekanntes Stecklicht am Fahrrad verwendbar.

Das als Sicherungsblock ausgeführte zweite Grundelement 20 umfasst einen länglichen, in etwa quaderförmigen Griff 21 in dessen Oberseite in etwa mittig ein Schließzylinder 22 eingelassen ist. Gegenüberliegend vom Schließzylinder 22 ragt aus dem Griff 21 der Verbindungsstift 23 heraus, über den die beiden Grundelemente 10, 20 miteinander verbindbar sind. Zu diesem Zweck weist das Lampengehäuse 11 auf einer dem Halteelement 15 gegenüberliegenden Oberseite eine Öffnung auf, unterhalb derer in etwa mittig im Lampengehäuse 11 eine Stiftaufnahme 16 positioniert ist. Die Stiftaufnahme 16 ist komplementär zu dem Verbindungsstift 23 ausgebildet, so dass dieser in ihr verrasten kann und die beiden Grundelemente 10, 20 mit einander verbunden sind. Die Stiftaufnahme ist dabei solide ausgebildet und starr mit dem Lampengehäuse 11 oder einem tragenden Teil desselben verbunden. Bevorzugt wird als Material für die Stiftaufnahme ein widerstandsfähiger Kunststoff in Verbindung mit einer Metallhülse eingesetzt. Ein Trennen der Grundelemente 10, 20 ist nur durch Betätigung des Schließzylinders 22 mit einem passenden Schlüssel möglich. Im verrasteten Zustand sind die zueinander weisenden Oberflächen der Grundelemente 10, 20 soweit voneinander beabstandet, dass zwischen ihnen eine Helmschale Platz finden kann.

Im dargestellten Ausführungsbeispiel ist der Verbindungsstift 23 fest mit dem Griff 21 verbunden, also somit ein Teil des zweiten Grundelements 20. Es ist jedoch ebenso denkbar, einen Verbindungsstift oder allgemeiner, ein Verbindungselement, vorzusehen, das fest mit dem als Fahrradlampe ausgeführten ersten Grundelement 10 verbunden ist und das dann mit dem zweiten Grundelement 20 abschließbar verrastet.

Zur Sicherung eines Fahrradhelms wird das Lampengehäuse 11 mit seinem Halteelement 15 aus der entsprechenden Haltevorrichtung entnommen und über den Schlüssel der Schließzylinder 22 betätigt, sodass der Verbindungsstift 23 an seinem unteren Ende aus der Stiftaufnahme 16 des Lampengehäuses 11 gelöst wird. Der Verbindungsstift 23 wird dann durch eine Öffnung am Fahrrad geführt, die beispielsweise in einer eigens dafür am Fahrrad angebrachten Lasche vorgesehen ist. Auf den Verbindungsstift 23 wird dann weiter der Fahrradhelm gesteckt, indem der Verbindungsstift 23 durch eine der Belüftungsöffnungen des Fahrradhelms geführt wird. Anschließend wird auf das Ende des Verbindungsstifts 23 das Lampengehäuse 11 gesteckt, wobei der vordere Teil des Verbindungsstifts 23 in der Stiftaufnahme 16 verrastet. Die beiden Grundelemente 10, 20 sind so dabei groß, dass sie nicht durch die Belüftungsöffnungen des Helms passen. Schließlich wird der Schließzylinder 22 betätigt, um das Helmschloss in dieser verrasteten Position zu sichern. Es kann auch vorgesehen sein, dass mit dem Verrasten des Verbindungsstiftes 23 in die Stiftaufnahme 16 das Helmschloss bereits geschlossen ist und ein Schlüssel nur zum Lösen der beiden Grundelemente 10, 20 voneinander benötigt wird.

Durch das so gebildete Helmschloss wird zum einen der Helm diebstahlsicher am Fahrrad festgelegt und zum anderen die Fahrradlampe als Teil des Helmschlosses ebenfalls gegen Diebstahl geschützt. Bei Benutzen eines bekannten Stecklichts ist dieses entweder nicht geschützt oder muss - ebenso wie ein Helm - zum Schutz vor Diebstahl beim Abstellen des Fahrrads mitgeführt werden.

Falls, beispielsweise aus Platzgründen, keine eigens zu dem genannten Zweck vorgesehene Lasche mit Öffnung am Fahrrad vorhanden ist, durch die der Verbindungsstift 23 geführt wird, kann das Helmschloss beispielsweise auch durch eine Lücke zwischen zwei Speichen geführt werden, um den Helm am Fahrrad festzulegen. Selbst wenn es dabei durch passende Drehung oder Gewaltanwendung möglich wäre, die Einheit aus Helmschloss und Helm vom Fahrrad zu trennen, kann das Helmschloss dennoch nicht ohne Beschädigung des Helms von diesem getrennt werden, wodurch auch bereits ein Diebstahlschutz gegeben ist.

In einer Weiterbildung des dargestellten Helmschlosses kann vorgesehen sein, dass ein einziehbares Stahlseil in dem Grundelement 10 angeordnet ist. Zum Einziehen ist beispielsweise ein ggf. federbeaufschlagte Spule geeignet. Über das Stahlseil kann eine Befestigung des Helmschlosses am Fahrrad oder einer Garderobe o.ä. erfolgen. Auch weitere Helme oder Taschen können damit zusätzlich durch das Helmschloss gesichert werden.

In einer Weiterbildung des dargestellten Helmschlosses kann vorgesehen sein, den Verriegelungsmechanismus der beiden Grundelemente 10, 20 so auszuführen, dass im verriegelten Zustand der Griff 21 bis auf die Oberseite des Lampengehäuses 11 abgesenkt werden kann. Dieses kann beispielsweise dadurch erfolgen, dass der Verbindungsstift 23 teleskopartig auseinanderziehbar ist. Eine andere Möglichkeit ist, den Verbindungsstift 23 und die Stiftaufnahme 16 so auszuführen, dass nach dem Verrasten der Verbindungsstift 23 nicht mehr aus der Stiftaufnahme gezogen werden kann, aber weiter in diese hineingeschoben werden kann.

Mit bis auf die Oberseite des Lampengehäuses 11 abgesenktem Griff 21 bilden die beiden Grundelemente 10, 20 eine kompakte Einheit wenn das Helmschloss nicht zur Sicherung eines Helms eingesetzt wird, sondern am Fahrrad in der Haltevorrichtung eingesetzt ist und als Fahrradlampe dienen kann. Es ist dabei von Vorteil, wenn die Unterseite des Griffs 21 und die Oberseite des Lampengehäuses 11 zueinander passende Formgebung haben, beispielsweise einen gleichen oder ähnlichen Krümmungsradius aufweisen. Auch ist es denkbar, eine Vertiefung in der Oberseite des Lampengehäuses 11 vorzusehen, in die der Griff 21 ganz oder teilweise eintauchen kann, wodurch eine besonders kompakte und verletzungssichere Bauform möglich ist.

In einer alternativen Ausgestaltung kann das zweite Grundelement 20 als Rücklicht ausgebildet sein. Für die Benutzung als Rücklicht im entriegelten und getrennten Zustand der beiden Grundelemente 10 und 20 ist dann bevorzugt ein separater Halter an der Sattelstütze o.ä. vorgesehen, in den das Rücklicht eingesteckt werden kann. Gegebenenfalls kann der Halter dann so ausgebildet sein, dass im verriegelten Zustand das aus beiden Grundelementen 10, 20 gebildete Helmschloss samt Helm festgelegt werden kann.

### Bezugszeichenliste

- 10: Erstes Grundelement (Fahrradlampe)
- 11: Lampengehäuse
- 12: Leuchtmittel
- 13: Schalter
- 14: Batteriefach
- 15: Befestigungselement
- 16: Stiftaufnahme

- 20: Zweites Grundelement (Sicherungsblock)
- 21: Griff
- 22: Schließzylinder
- 23: Verbindungsstift

## Patentansprüche

1. Helmschloss für einen Fahrradhelm, aufweisend zwei Grundelemente (10, 20), die über einen zwischen ihnen angeordneten Verbindungsstift (22) abschließbar miteinander verbindbar sind, **dadurch gekennzeichnet, dass** mindestens eines der Grundelemente (10, 20) als Fahrradlampe ausgebildet ist.

2. Helmschloss nach Anspruch 1, bei dem eines der Grundelemente (10) als Fahrradvorderlampe und/oder ein weiteres der Grundelemente (20) als Rücklicht ausgebildet ist.

3. Helmschloss nach Anspruch 1 oder 2, bei dem eines der Grundelemente (20) einstückig mit dem Verbindungsstift (23) ausgeführt ist, und bei dem das andere Grundelement (10) eine Stiftaufnahme (23) aufweist, in der der Verbindungsstift (23) festlegbar ist.

4. Helmschloss nach einem der Ansprüche 1 bis 3, bei dem eines der Grundelemente (20) als ein Griff (21) mit einem Schließzylinder (22) ausgebildet, wobei über den Schließzylinder (22) die Verbindung der beiden Grundelemente (10, 20) gegen ein unerwünschtes Lösen gesichert werden kann.

5. Helmschloss nach einem der Ansprüche 1 bis 4, bei dem mindestens eines der Grundelemente (10) ein Lampengehäuse (11) aufweist, in dem Leuchtmittel (12), ein Schalter (13) und ein Batteriefach (14) angeordnet sind, sowie ein Befestigungselement (15), um das Lampengehäuse (11) an einem Fahrrad zu befestigen.

6. Helmschloss nach einem der Ansprüche 1 bis 5, bei dem die Grundelemente (10, 20) im verbundenen Zustand so weit aufeinander zu bewegt werden können, dass sie sich mit zueinander weisenden Oberflächen berühren.

7. Helmschloss nach Anspruch 4, 5 und 6, bei dem das Lampengehäuse (11) eine Vertiefung aufweist, um den Griff (21) ganz oder teilweise aufzunehmen.
